(19) Europäisches Patentamt

**European Patent Office**

**Office européen des brevets**

(11) Numéro de publication: **0 207 857 B1**

(12) **FASCICULE DE BREVET EUROPEEN**

(45) Date de publication de fascicule du brevet: **29.04.92**

(21) Numéro de dépôt: **86401421.2**

(22) Date de dépôt: **27.06.86**

Demande divisionnaire 90112440.4 déposée le 27/06/86.

(51) Int. Cl.⁵: **C01F 17/00**, B01J 21/00, B01J 23/10, B01J 23/12, B01J 37/00

(54) **Composition à base d'oxyde cérique, sa préparation et ses utilisations.**

(30) Priorité: **03.07.85 FR 8510137**

(43) Date de publication de la demande:
**07.01.87 Bulletin 87/02**

(45) Mention de la délivrance du brevet:
**29.04.92 Bulletin 92/18**

(84) Etats contractants désignés:
**AT BE CH DE FR GB IT LI LU NL SE**

(56) Documents cités:
**EP-A- 0 091 662**
**FR-A- 1 257 058**
**GB-A- 2 102 780**
**US-A- 4 062 810**

**PATENT ABSTRACTS OF JAPAN, vol. 7, no. 219 (C-188)[1364], 29 septembre 1983; & JP - A - 58 114 730 (TOKUYAMA SODA K.K.) 08-07-1983**

**PATENT ABSTRACTS OF JAPAN, vol. 5, no. 79 (C-56)[751], 23 mai 1981; & JP - A - 56 26547 (TOYOTA JIDOSHA KOGYO K.K.)**

14-03-1981

(73) Titulaire: **RHONE-POULENC CHIMIE**
**25, quai Paul Doumer**
**F-92408 Courbevoie Cédex(FR)**

(72) Inventeur: **Sauvion, Guy-Noel**
**8, rue du Béarn**
**F-94550 Chevilly-Larue(FR)**
Inventeur: **Caillod, Jack**
**31, rue Phanie-Leleu**
**F-95150 Taverny(FR)**
Inventeur: **Gourlaouen, Claire**
**188, rue Lafayette**
**F-75010 Paris(FR)**

(74) Mandataire: **Dutruc-Rosset, Marie-Claude et al**
**RHONE-POULENC INTERSERVICES Service Brevets Chimie 25, Ouai Paul Doumer**
**F-92408 Courbevoie Cédex(FR)**

EP 0 207 857 B1

PATENT ABSTRACTS OF JAPAN, vol. 6, no. 139 (C-116)[1017], 28 juillet 1982; & JP - A - 57 63133 (KIYATARAA KOGYO K.K.) 16-04-1982

ZEITSCHRIFT FÜR ANORGANISCHE UND ALLGEMEINE CHEMIE, vol. 315, cahier 3-4, juin 1962, pages 121-135; RIENÄCKER et al.: "Eigenschaften von Cer/Lanthan-Mischoxyden, insbesondere als Katalysatoren der Oxydation des Kohlenoxydes"

## Description

La présente invention est relative à une composition à base d'oxyde cérique permettant la stabilisation à haute température de sa surface spécifique. L'invention vise également des procédés pour son obtention et ses applications tout particulièrement dans le domaine de la catalyse.

Dans l'exposé qui suit de l'invention, on entend par surface spécifique, la surface spécifique B.E.T déterminée selon la méthode BRUNAUER - EMMETT - TELLER décrite dans le périodique " The Journal of American Society 1938, 60, 309".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de CO + $H_2$ sur des catalyseurs au platine déposé sur de l'oxyde cérique. (C.R. Acad. Sc. Paris t.297 - Série II-471 - 1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due à la coalescence des micropores très fins. Au cours de cette coalescence, une partie du catalyseur est englobée dans la masse du support et ne peut plus être en contact avec les réactifs.

Jusqu'à présent, la plupart des oxydes cériques préparés présentent une surface spécifique qui décroit rapidement pour des températures de fonctionnement supérieures à 500°C. Ainsi, R.ALVERO et coll. (J. Chem. Soc. Dalton Trans 1984, 87) ont obtenu à partir de nitrato cérate d'ammonium, un oxyde cérique présentant après calcination à une température de 600°C, une surface spécifique de 29 $m^2$/g.

Les auteurs précités P. MERIAUDEAU et coll ont déterminé sur le même type de préparation une surface spécifique de 27 $m^2$/g.

La présente invention se propose de fournir une composition à base d'oxyde cérique permettant la stabilisation à haute température de sa surface spécifique caractérisée par le fait qu'elle contient de l'oxyde cérique combiné ou non avec au moins un oxyde d'un autre élément métallique A choisi dans le groupe constitué par l'aluminium, le silicium, le zirconium, le thorium

L'oxyde cérique mis en oeuvre dans l'invention est un produit connu et décrit dans la littérature.

Il peut être préparé notamment par chauffage à l'air entre 400°C et 1000° de l'hydroxyde cérique ou de certains sels oxygénés tels que nitrates, sulfates, carbonates, oxalates, acétates, (Cf. Paul PASCAL - Nouveau Traité de Chimie Minérale. Tome VII p 777 - 1959 -).

L'oxyde cérique mis en oeuvre présente une surface spécifique d'au moins 10 $m^2$/g de préférence, supérieure à 80 $m^2$/g : et avantageusement comprise entre 80 et 200 $m^2$/g.

Constitue une matière première de choix, l'oxyde cérique décrit dans la demande de brevet n° 86/04347 qui présente une surface spécifique pouvant atteindre 180 à 160 $m^2$/g mesurée après calcination à une température comprise entre 400 et 450°C : ledit oxyde étant préparé comme décrit ultérieurement par calcination d'une dispersion colloïdale aqueuse d'un composé de cérium IV qui a été auparavant déstabilisée par addition d'une base.

Il peut être avantageux dans certaines applications de le mettre en forme en effectuant une agglomération de ces particules selon des techniques bien connues d'extrusion ou de pastillage par pression.

La composition de l'invention contient outre l'oxyde cérique, un oxyde du ou des métaux précités en une quantité pouvant représenter de 1 à 20% du poids de l'oxyde cérique et choisie de préférence entre 1 et 5%.

Elle peut être préparée par un procédé qui consiste à mélanger intimement l'oxyde cérique avec au moins un oxyde des autres métaux précités.

On effectue de préférence ce mélange intime par imprégnation de l'oxyde cérique à l'aide d'une solution d'au moins un sel des métaux précités décomposable en oxyde par chauffage que l'on dénommera, de manière simplifiée, précurseur d'oxyde.

Au titre de précurseurs d'oxydes d'aluminium, on peut citer les nitrates et les sulfates.

En ce qui concerne les précurseurs d'oxyde de silicium, on fait appel de préférence aux silicates d'ammonium quaternaire.

L'ion ammonium quaternaire des silicates mis en oeuvre selon l'invention présente des radicaux hydrocarbonés ayant de préférence 1 à 3 atomes de carbones.

On met de préférence en oeuvre au moins un silicate choisi parmi : le silicate de tétraméthylammonium, le silicate de tétraéthylammonium, le silicate de tétrapropylammonium, le silicate de tétrahydroxyéthylammonium (ou silicate de tétraéthanolammonium). Le silicate de tétraméthylammonium est notamment décrit dans Y.U.I. Smolin "Structure of water soluble silicates with complexe cations" dans "Soluble silicates" Edition 1982. Le silicate de tétraéthanolammonium est notamment décrit dans Helmut H. Weldes, K. Robert Lange "Properties of soluble silicates" dans "Industrial and Engineering Chemistry" vol. 61, N 4, Avril 1969, et dans le brevet US 3 239 521. Les références citées çi-dessus décrivent également d'autres silicates d'ammonium quaternaires solubles dans l'eau qui font partie de l'invention.

Comme précurseurs d'oxyde de zirconium, on peut utiliser du sulfate de zirconium, du nitrate de zirconyle, éventuellement des complexes fluorés de zirconium et tout autre composé susceptible par calcination, de conduire à des oxydes de zirconium, soit sous forme zircone, soit sous forme baddeleyite.

Selon une variante préférée de l'invention, l'imprégnation est réalisée "à sec" c'est-à-dire que le volume total de solution utilisée est approximativement égal au volume poreux total présenté par le support. Pour la détermination du volume poreux, on peut le faire selon la méthode connue au porosimètre à mercure ou bien mesurer sur un échantillon, la quantité d'eau qu'il absorbe. Il est également possible d'imprégner le support par trempage de celui dans la solution du précurseur d'oxyde de l'élément A et d'éliminer l'excès de solution par égouttage.

La concentration de la solution du précurseur d'oxyde dépend de la solubilité dudit précurseur.

Selon une deuxième étape du procédé de l'invention, on sèche l'oxyde cérique imprégné pour éliminer l'eau, en laissant ainsi les précurseurs des oxydes désirés sous forme dispersée dans l'oxyde cérique.

Le séchage est effectué le plus souvent à l'air à une température qui peut varier entre 80 et 300°C et choisie de préférence entre 100 et 150°C. Le séchage est poursuivi jusqu'à obtention d'un poids constant. Généralement, la durée du séchage est comprise entre 1 et 24 heures.

Selon la troisième étape du procédé de l'invention, on calcine l'oxyde cérique imprégné à une température comprise généralement entre 400 et 1000°C et de préférence entre 600 et 900°C. La durée de calcination doit être suffisante pour transformer les précurseurs, en oxydes.

La durée de calcination peut varier dans de larges limites entre 1 et 24 heures et est choisie de préférence entre 4 et 10 heures.

La composition à base d'oxyde cérique préparée selon l'invention permet la stabilisation à haute température, de sa surface spécifique ce qui est mis en évidence dans les exemples ci-après.

Un autre mode de préparation de l'invention consiste à introduire l'élément métallique A, sous la forme de son précurseur d'oxyde, au cours de la fabrication de l'oxyde cérique.

Un mode de réalisation de cette variante d'exécution consiste à préparer la composition de l'invention selon un procédé qui consiste :

- dans une première étape, à introduire au moins un précurseur d'oxyde d'un élément métallique A dans une dispersion colloïdale aqueuse d'un composé de cérium IV ,
- dans une deuxième étape, à déstabiliser ladite dispersion par addition d'une base,
- dans une troisième étape, à séparer le précipité obtenu,
- dans une quatrième étape, à le soumettre à un traitement thermique.

Dans la première étape du procédé de l'invention on peut faire appel à toute dispersion colloïdale aqueuse d'un composé de cérium IV et plus particulièrement à celles qui sont décrites dans la demande de brevet n° 86/04347 qui permettent d'obtenir ensuite des oxydes cériques à grande surface spécifique.

Les dispersions colloïdales aqueuses d'un composé de cérium IV décrites dans la demande de brevet n° 86/04347 sont obtenues par mise en dispersion dans l'eau d'un composé de cérium IV de formule générale (I) :

$$Ce\,(M)_x\,(OH)_y\,(NO_3)_z \, , \, n\,H_2O \qquad (I)$$

dans laquelle :

- M représente un métal alcalin ou un radical ammonium quaternaire
- x est compris entre 0 et 0,2
- z est compris entre 0 et 0,7
- y est tel que $y = 4 - z + x$
- n est compris entre 0 et environ 20.

On dénomme de manière simplifiée, par le terme "sol", la dispersion colloïdale aqueuse du composé de cérium IV répondant à la formule (I).

La concentration du composé de cérium IV dans le sol n'est pas critique. Lorsqu'elle est exprimée en $CeO_2$, elle se situe entre 0,1 et 2,0 moles/litre et, de préférence, entre 0,5 et 1 mole/litre.

Le taux de cérium IV sous forme colloïdale est supérieur à 95 % mais l'invention n'exclut pas le sol dans lequel il y aurait présence de cérium IV sous forme ionique. On choisit de préférence un taux de cérium compris entre 99 et 100 %.

La taille des colloïdes présents dans le sol peut varier dans une gamme assez large. Généralement, le diamètre hydrodynamique moyen des colloïdes déterminé par diffusion quasiélastique de la lumière selon la méthode décrite par Michael L. Mc Connell dans Analytical Chemistry 53, n° 8 1007 A (1981), peut varier entre 300 et 2000 Å.

A titre d'exemples de sols présentant les caractéristiques précitées, on peut citer plus particulièrement ceux de la demande de brevet n° 86/04347 qui sont préparés par mise en dispersion dans l'eau d'un composé de cérium IV répondant à la formule (I) dans laquelle x est égal à 0 et z est compris entre 0,35 et 0,7, qui présentent des tailles de colloïdes pouvant varier dans une gamme assez large allant de 300 à 1000 Å et lesdits colloïdes par basification jusqu'à obtention d'un pH de 3,0, peuvent devenir plus gros, leur diamètre hydrodynamique se situant alors entre 500 et 2000 Å.

L'obtention de sols ayant lès tailles de colloïdes précitées consiste à mettre en dispersion dans l'eau, le composé de cérium IV précité qui est directement dispersable dans l'eau. Ledit composé est dispersé sous agitation en milieu aqueux ou en milieu légèrement acide de telle sorte qu'il conduise à un sol dont le pH est compris entre 1 et 2,5.

Ledit composé de cérium IV est préparé selon un procédé qui consiste dans une première étape, à hydrolyser une solution aqueuse d'un nitrate de cérium IV en milieu acide, dans une deuxième étape, à séparer le précipité obtenu et dans une troisième étape, qui n'est pas obligatoire, à le traiter thermiquement.

Dans la première étape, on réalise l'hydrolyse d'une solution aqueuse d'un nitrate de cérium IV.

A cet effet, on part d'une solution aqueuse de nitrate cérique. Ladite solution peut contenir sans inconvénient du cérium à l'état céreux mais il est souhaitable pour avoir un bon rendement de précipitation qu'elle contienne au moins 85 % de cérium IV.

La solution de sel de cérium est choisie de telle sorte qu'elle ne contienne pas d'impuretés qui puissent se retrouver, dans le produit final. Il peut être avantageux de mettre en jeu une solution d'un sel de cérium présentant un degré de pureté supérieure à 99 %.

La concentration de la solution de sel de cérium n'est pas un facteur critique, selon l'invention. Lorsqu'elle est exprimée en cérium IV, elle peut varier entre 0,3 et 3 moles par litre de préférence entre 0,5 et 1,5 moles/litre.

A titre de matières premières, on peut faire appel à une solution de nitrate cérique obtenue par action de l'acide nitrique sur un oxyde cérique hydraté préparé d'une manière classique, par réaction d'une solution d'un sel céreux par exemple, le carbonate céreux et d'une solution d'ammoniaque en présence d'eau oxygénée.

La solution de nitrate cérique obtenue selon le procédé d'oxydation électrolytique d'une solution de nitrate céreux et qui est décrite dans la demande de brevet français FR-A 2 570 087 constitue une matière première de choix.

Le milieu d'hydrolyse est constitué par de l'eau dont la nature n'est pas critique et qui est, de préférence, de l'eau distillée ou permutée.

L'acidité peut être apportée par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,01 N et 5 N de préférence entre 0,1 N et 1 N.

La quantité d'ions $H^+$ introduite pour la réaction d'hydrolyse est telle que le rapport molaire $[H^+]/[Ce^{IV}$ éq.] est supérieur ou égal à 0 et inférieur ou égal à 3 de préférence compris entre 0,4 et 2,5.

La proportion entre la solution aqueuse de sel de cérium IV et le milieu d'hydrolyse (essentiellement l'eau) est telle que la concentration finale équivalente en cérium IV est comprise entre 0,1 et 1,0 mole/litre de préférence 0,2 à 0,6 mole/litre.

On définit la concentration finale équivalente en cérium IV par l'équation suivante :

$$[Ce^{IV} \text{ éq.}] = \frac{[Ce^{IV}] \times V'}{V + V'}$$

dans laquelle :
- $[Ce^{IV}]$ est la concentration en moles/litre de la solution de sel de cérium IV

- V représente le volume d'eau éventuellement additionné d'acide
- V' représente le volume de la solution de cérium IV.

L'hydrolyse du sel de cérium IV réalisée dans les conditions telles que décrites précédemment est effectuée d'une manière préférentielle entre 70°C et 120°C et de préférence à la température de reflux du milieu réactionnel qui se situe vers 100°C.

Il est plus aisé de travailler à la température de reflux qui est facile à contrôler et à reproduire.

On peut mettre en oeuvre le procédé de préparation du composé de cérium IV selon plusieurs variantes. Par exemple, on peut additionner en une seule fois, graduellement ou en continu la solution de sel de cérium IV dans l'eau contenant éventuellement de l'acide portée à la température réactionnelle ou inversement. On peut également conduire le procédé en continu. A cet effet, on effectue simultanément et en continu le mélange de la solution de sel de cérium IV et du milieu d'hydrolyse et l'on chauffe en continu le mélange, à la température réactionnelle choisie. On peut mélanger la solution de sel de cérium IV et le milieu d'hydrolyse puis l'on porte ledit mélange maintenu sous agitation à la température réactionnelle.

Quel que soit le mode d'exécution, on observe la formation d'un précipité. Le temps de réaction peut varier entre 2 et 8 heures et de préférence, entre 3 et 6 heures.

Dans l'étape suivante, on sépare selon les techniques classiques, la masse réactionnelle qui se présente sous la forme d'une suspension dont la température se situe le plus souvent entre 90°C et 100°C. Cette opération est effectuée avant ou après refroidissement de la masse réactionnelle à température ambiante c'est-à-dire le plus souvent entre 10°C et 25°C.

On sépare le précipité selon les techniques classiques de séparation : filtration, décantation, essorage et centrifugation.

On obtient un précipité d'un composé de cérium IV qui répond à la formule (I) dans laquelle n est supérieur à 0 et inférieur ou égal à environ 20.Ce composé est directement dispersable dans l'eau.

Il est également possible de soumettre le précipité obtenu à une opération de séchage qui selon les conditions et notamment selon la durée du séchage et de sa température permet d'obtenir un composé de cérium IV de formule (I) dans laquelle n est supérieur ou égal à 0 et inférieur à 20.

On soumet le produit obtenu à un séchage qui peut varier entre 15°C et 100°C et de préférence à température ambiante et 50°C. Cette opération peut être faite à l'air ou sous pression réduite par exemple entre 1 et 100 mm de mercure (133,322 Pa et 13 332,2 Pa). La durée du séchage est choisie de préférence entre 5 et 48 heures afin d'obtenir un produit sec (n = 0).

Quel que soit le degré d'hydratation du composé de cérium IV répondant à la formule (I), on obtient un composé de cérium IV directement dispersable dans l'eau et qui par mise en dispersion dans l'eau conduit à un sol ayant des colloïdes présentant un diamètre hydrodynamique variant entre 300 et 1000 Å.

A titre d'autres exemples de sols susceptibles d'être mis en oeuvre dans le procédé de l'invention, on peut faire appel à des sols ayant généralement un diamètre hydrodynamique moyen variant entre 300 et 600 Å et préparé selon un procédé qui consiste à former une dispersion d'oxyde cérique hydraté avec de l'eau et un acide notamment l'acide nitrique, à chauffer la suspension, la quantité d'acide présente dans la dispersion est telle que le pH est inférieur à 5,4 et, de préférence, inférieur à 2,8. L'oxyde cérique hydraté de départ est préparé par réaction d'une solution d'un sel céreux, par exemple, le carbonate céreux et d'une solution d'ammoniaque en présence d'un agent oxydant, notamment l'eau oxygénée. Pour plus de détails sur la préparation du sol, on peut se référer à FR-A-2 416 867.

Dans la première étape du procédé de l'invention, on introduit au moins un précurseur d'oxyde de l'élément A dans une dispersion colloïdale aqueuse d'un composé de cérium IV décrite ci-dessus.

Les précurseurs des oxydes d'aluminium, de silicium, de zirconium et de thorium susceptibles d'être utilisés sont ceux décrits précédemment.

Ils peuvent être mis en oeuvre sous forme de solution aqueuse ou éventuellement sous forme solide si elle existe directement dans la dispersion colloïdale aqueuse du composé de cérium IV.

La quantité de précurseur(s) d'oxyde(s) mis en oeuvre est telle que l'on ait les pourcentages pondéraux définis dans la composition finale.

La deuxième étape du procédé de l'invention consiste à effectuer la déstabilisation de la dispersion colloïdale aqueuse d'un composé de cérium IV contenant au moins un précurseur d'oxyde de l'élément A par addition d'une base dans ladite dispersion.

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention, elle peut varier dans de larges limites, par exemple, entre 0,1 et 11 N mais il est préférable de faire appel à des solutions dont la concentration varie entre 5 et 10 N.

EP 0 207 857 B1

La quantité de base additionnée est déterminée de telle sorte que le pH final de la dispersion traitée soit supérieur à 7 et de préférence supérieur ou égal à 9 et inférieur ou égal à 10.

D'une manière pratique, on additionne la base dans la dispersion colloïdale aqueuse de composé de cérium IV contenant au moins un précurseur d'oxyde de l'élément A ou inversement. L'addition peut être effectuée en une seule fois, graduellement ou en continu. Elle s'effectue sous agitation.

Préférentiellement, on ajoute la base dans ladite dispersion.

Le débit d'addition de la base dans ladite dispersion n'est pas critique : lorsqu'il est exprimé en moles d'OH$^-$ par mole de cérium IV et par heure, il peut varier entre 0,1 et 5 et de préférence 2 et 4.

On fait le mélange à une température qui est de préférence inférieure à 60°C et on travaille de préférence à la température ambiante le plus souvent comprise entre 10 et 25°C.

A la fin de l'addition de la solution basique, on peut éventuellement maintenir encore le milieu réactionnel sous agitation pendant quelque temps afin de parfaire la précipitation : cette durée n'est pas critique et peut varier entre 1 minute et 24 heures.

La troisième étape du procédé consiste à séparer le précipité obtenu selon les techniques classiques de séparation solide-liquide: filtration, décantation, centrifugation ou essorage.

Cette séparation est effectuée généralement à température ambiante.

On peut éventuellement soumettre le précipité séparé à une opération de lavage afin d'éliminer les ions OH$^-$.

Le lavage peut être opéré à l'eau ou à l'aide d'un solvant organique. On peut faire appel aux hydrocarbures aliphatiques, cycloaliphatiques ou aromatiques, à des cétones aliphatiques ou cycloaliphatiques ou à des alcools aliphatiques ou cycloaliphatiques tels que le méthanol, l'éthanol, le n-propanol, l'isopropanol, le n-butanol, l'isobutanol, le néobutanol.

On effectue de un à plusieurs lavages et le plus souvent de un à trois lavages.

Après ce lavage, la teneur en eau du précipité est comprise entre 20 et 80 % et généralement entre 20 et 50 %.

Dans la quatrième étape du procédé de l'invention, on effectue le traitement thermique du produit obtenu après séparation et éventuellement lavage.

Le traitement thermique débute généralement par un séchage effectué à l'air ou sous pression réduite de l'ordre de 1 à 100 mm de mercure (133,322 Pa et 13 332,2 Pa). La température de séchage peut varier entre la température ambiante et 100°C et la durée de séchage n'est pas critique et peut être comprise entre 2 et 48 heures et de préférence 10 à 24 heures.

Enfin, dans une dernière opération, on soumet le produit séché à une calcination à une température choisie entre 400°C et 1000°C mais de préférence, entre 600°C et 900°C. Elle dure environ 1 heure à 24 heures et de préférence 4 à 10 heures.

La température de calcination est déterminée en fonction de la surface spécifique souhaitée pour l'application catalytique subséquente en tenant compte du fait que la surface spécifique est d'autant plus faible que la température de calcination est plus élevée.

La présence de l'élément métallique A introduit dans l'oxyde cérique selon ce mode de préparation permet également, comme démontré dans l'exemple ci-après, une meilleure stabilité de la surface spécifique de l'oxyde cérique soumis à une élévation de température.

Les applications de la composition à base d'oxyde cérique selon l'invention sont très nombreuses. On peut citer notamment les applications en tant que charge, liant, washcoat, épaississant, dispersant, renforçateur, pigment, absorbant.

L'oxyde cérique stabilisé selon l'invention le rend bien adapté pour être utilisé dans le domaine de la catalyse, comme catalyseur ou comme support catalytique.

Il peut être employé comme catalyseur ou support de catalyseur pour effectuer diverses réactions telles que, par exemple : la déshydratation, l'hydrosulfuration, l'hydro- dénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Les exemples qui suivent illustrent l'invention sans toutefois la limiter. Dans les exemples, les éléments métalliques sont dosés par spectrométrie d'émission plasma.

7

Exemple 1 :

Dans cet exemple, on prépare un oxyde cérique contenant 2,5% de $SiO_2$.

On part d'un oxyde cérique obtenu de la manière qui suit :

400 g de nitrate céreux hydraté $Ce(NO_3)_3$, $6H_2O$ sont dissous dans 220 $cm^3$ d'eau puis la solution est évaporée à 140°C pendant 4 heures. On effectue le séchage à l'air du produit obtenu progressivement à 400°C selon une montée en température de 1°C/minute.

On fait une calcination à l'air à 400°C pendant 6 heures et l'on obtient un oxyde cérique dont l'analyse par diffraction X montre qu'il est conforme à celui de l'oxyde cérique pur (JCPDS 40593).

Ensuite 153g d'oxyde cérique mis en forme par extrusion (addition de 20% d'eau) sous la forme de granulés ayant comme dimensions 2x3mm, sont imprégnés dans un drageoir tournant par 32$cm^3$ d'une solution aqueuse de silicate de tétraéthylammonium présentant un rapport molaire $SiO_2/(C_2H_5)_4N^+$ égal à 1 et contenant 116g de $SiO_2$ par litre de solution.

L'oxyde cérique imprégné est ensuite soumis à un séchage à 140°C pendant 16 heures puis soumis à une calcination pendant 6 heures à différentes températures : 400°C, 550°C, 700°C et 900°C.

Après calcination, on effectue sur le produit désaggloméré par broyage dans un mortier d'agate, la mesure de la surface spécifique selon la méthode B.E.T.

Les résultats obtenus sont consignés dans le tableau I. A titre de comparaison, on donne la mesure de la surface spécifique de l'oxyde cérique non stabilisé (essai A).

Tableau I

|  | Additif | 400°C | 550°C | 700°C | 900°C |
|---|---|---|---|---|---|
| Exemple 1 | $SiO_2$ | 80 | 70 | 60 | 20 |
| Essai A | - | 70 | 50 | 30 | 5 |

L'examen du tableau I met clairement en évidence une meilleure stabilisation de la surface spécifique de l'oxyde cérique lors qu'il est additionné de silice.

Exemple 2 :

On prépare, ci-après, un oxyde cérique contenant 2,5% de $ZrO_2$, selon le protocole opératoire de l'exemple 1 mais en réalisant l'imprégnation avec 32$cm^3$ d'une solution de nitrate de zirconyle contenant 116g/l d'oxyde de zirconium.

Les surfaces spécifiques BET mesurées après calcination sont consignées dans le tableau II.

Tableau II

|  | Additif | 400°C | 550°C | 700°C | 900°C |
|---|---|---|---|---|---|
| Exemple 2 | $ZrO_2$ | 75 | 70 | 50 | 10 |
| Essai A | - | 70 | 50 | 30 | 5 |

Exemple 3 :

On prépare, ci-après, un oxyde cérique contenant 2,5% de $Al_2O_3$.

Selon le protocole opératoire de l'exemple 1, on imprègne en deux fois, 153g d'oxyde cérique par 64 $cm^3$ d une solution de nitrate d'aluminium contenant 58g/l de $Al_2O_3$.

On sèche et calcine l'oxyde cérique imprégné comme indiqué précédemment.

Les résultats obtenus sont les suivants :

tableau IV

|  | Additif | 400°C | 550°C | 700°C | 900°C |
|---|---|---|---|---|---|
| Exemple 3 | Al₂O₃ | 80 | 70 | 45 | 10 |
| Essai A | - | 70 | 50 | 30 | 5 |

Le tableau IV montre l'effet de stabilisation de la surface spécifique à haute température obtenu par adjonction à l'oxyde cérique, d'oxyde d'aluminium.

Exemple 4 :

Dans l'exemple suivant, on met en évidence l'effet de stabilisation de la surface spécifique d'un oxyde cérique à grande surface spécifique par addition de 2,5 % de $SiO_2$.

1 - L'oxyde cérique mis en oeuvre est préparé conformément à la demande de brevet n° 86/04347 et selon le mode opératoire ci-après:

Dans un réacteur muni d'un thermomètre, d'un dispositif d'agitation, d'un système d'introduction de réactifs, d'un réfrigérant ascendant et équipé également d'un dispositif de chauffage, on introduit à température ambiante 2,455 titres d'acide nitrique 0,59 N.

On élève la température de cette solution à 100°C, sous agitation et on additionne pendant 3 heures, 545 cm³ d une solution de nitrate cérique préparée conformément à FR-A 2 570 087 et contenant 1,28 moles/litre de cérium IV, 0,06 mole/litre de cérium III et ayant une acidité libre de 0,53 N.

On maintient le milieu réactionnel sous agitation et au reflux pendant 3 heures.

On effectue la filtration sur verre fritté (porosité n° 3).

On sèche le produit obtenu dans une étuve à 40°C pendant 48 heures. On en recueille 133,6 g.

On additionne 25,9 g du composé ainsi préparé dans de l'eau distillée mise en oeuvre en quantité suffisante pour obtenir un volume de 250 cm³. On obtient un sol ayant une concentration en $Ce^{IV}$ exprimée en $CeO_2$ de 86 g/l (0,5 M) et des colloïdes de diamètre hydrodynamique moyen de l'ordre de 570 Å.

Dans 250 cm³ du sol précédemment préparé, on additionne sous agitation et à température ambiante, une solution d'ammoniaque 11 N jusqu'à pH = 10, à raison de 22,5 cm³/heure.

On maintient la masse réactionnelle à pH = 10 durant 5 minutes, puis on effectue la séparation solide-liquide par filtration.

Après filtration, le solide recueilli est séché dans une étuve à 100°C durant 24 heures.

On le calcine ensuite dans un four à moufles durant 6 heures à 450°C.

On obtient un oxyde cérique présentant une surface spécifique de 107 m²/g.

2 - L'oxyde cérique ainsi préparé est imprégné par trempage dans une solution d'un précurseur d'oxyde qui est une solution de silicate de tétraéthylammonium contenant 250 g/l de $SiO_2$.

On élimine l'excès de solution par égouttage.

L'oxyde cérique imprégné est ensuite soumis à un séchage à 140°C pendant 16 heures puis soumis à une calcination pendant 6 heures à différentes températures : 450°C, 550°C, 700°C et 900°C.

Les résultats obtenus sont consignés dans le tableau V. A titre de comparaison, on donne la mesure de la surface spécifique de l'oxyde cérique non stabilisé (essai B).

tableau V

|  | Additif | 450°C | 550°C | 700°C | 900°C |
|---|---|---|---|---|---|
| Essai B | - | 107 | 79 | 35 | 5 |
| Exemple 4 | SiO₂ | 101 | 84 | 57 | 17 |

Exemple 5 :

Dans le présent exemple, on illustre un autre mode d'introduction de l'élément métallique A.

a - Préparation d'un sol d'un composé de cérium IV

Dans un réacteur muni d'un thermomètre, d'un dispositif d'agitation, d'un système d'introduction de réactifs, d'un réfrigérant ascendant et équipé également d'un dispositif de chauffage, on introduit à température ambiante :

- 2150 cm$^3$ d'une solution d'acide nitrique 1,02 N
- 850 cm$^3$ d une solution de nitrate cérique préparée par électrolyse conformément à FR-A 2 570 087 et contenant 1,23 moles/litre de cérium IV, 0,05 mole/litre de cérium III et ayant une acidité libre de 0,49 N.

Dans le milieu d'hydrolyse, la concentration en cérium IV exprimée en CeO$_2$ est égale à 60 g/l et le rapport molaire [H$^+$]/[Ce$^{IV}$ éq.] est égal à 2,5.

On maintient le milieu réactionnel sous agitation et au reflux pendant 4 heures.

On effectue la filtration sur verre fritté (porosité n° 3).

On sèche le produit obtenu dans une étuve à 40°C pendant 48 heures.

On recueille 59,4 g d'un précipité jaune contenant 83 % de CeO$_2$, et répondant à la formule (I) dans laquelle x est égal à 0 et le rapport molaire [NO$_3$$^-$]/[Ce$^{IV}$] étant d'environ 0,5.

On additionne 25,9 g du composé ainsi préparé dans de l'eau distillée mise en oeuvre en quantité suffisante pour obtenir un volume de 250 cm$^3$. On obtient un sol ayant une concentration en Ce$^{IV}$ exprimée en CeO$_2$ de 86 g/l (0,5 M).

L'examen par diffusion quasi-élastique de la lumière montre la présence de colloïdes de diamètre hydrodynamique moyen de l'ordre de 310 Å.

b - Préparation d'une composition contenant 2,5 % de SiO$_2$ exprimés par rapport au poids de l'oxyde cérique

Dans 500 cm$^3$ d un sol à 0,5 mole/litre de CeO$_2$ préparé conformément au mode opératoire décrit sous a-, on introduit 13 cm$^3$ d'une solution de silicate de tétraéthylammonium à 82 g/l de SiO$_2$ puis on ajoute dans le milieu obtenu, sous agitation et à température ambiante, une solution d'ammoniaque 5 N jusqu'à pH = 9, à raison de 200 cm$^3$/heure.

On maintient la masse réactionnelle à pH = 9 durant 5 minutes, puis on effectue la séparation solide-liquide par filtration.

On effectue ensuite un lavage du précipité récupéré dans 500 cm$^3$ d'eau distillée durant 15 minutes.

Après filtration, le solide recueilli est séché dans une étuve à 100°C durant 20 heures.

On le soumet ensuite à une calcination pendant 6 heures à différentes températures : 300°C, 450°C, 600°C, 800°C.

Les résultats obtenus sont consignés dans le tableau VI. A titre de comparaison, on donne la mesure de la surface spécifique de l'oxyde cérique obtenu selon le mode opératoire par déstabilisation et calcination du sol obtenu selon a- mais sans addition de la solution du précurseur d'oxyde (essai C).

tableau VI

|  | Additif | 300°C | 450°C | 600°C | 800°C |
|---|---|---|---|---|---|
| Exemple 5 | SiO$_2$ | 135 | 120 | 59 | 36 |
| Essai C | - | 144 | 115 | 42 | 10 |

**Revendications**

1. Composition à base d'oxyde cérique caractérisée par le fait qu'elle contient essentiellement de l'oxyde cérique et un additif constitué par au moins un des oxydes des métaux A pris dans le groupe constitué par l'aluminium, le silicium, le zirconium et le thorium et à une surface spécifique supérieure à 10 m$^2$/g, stable jusqu'à une température de calcination de 90°C.

2. Composition selon la revendication 1 caractérisée par le fait que l'additif représente de 1 à 20 %, exprimé en poids d'oxyde métallique, du poids de l'oxyde cérique.

3. Composition selon l'une des revendications 1 et 2 caractérisée par le fait que l'additif représente de 1 à 5% exprimé en poids d'oxyde métallique du poids de l'oxyde cérique.

4. Procédé de fabrication d'une composition à base d'oxyde cérique selon la revendication 1 caractérisé en ce qu'il consiste à ajouter à un oxyde cérique de surface supérieure à 10 $m^2/g$, un additif constitué par au moins un oxyde ou un précurseur d'oxyde de métaux choisis dans le groupe comprenant l'aluminium, le silicium, le zirconium, le thorium.

5. Procédé selon la revendication 4 caractérisé par le fait que l'additif représente de 1 à 20 %, exprimé en oxyde métallique, du poids de l'oxyde cérique.

6. Procédé selon la revendication 4 à 5 caractérisé par le fait que l'additif représente de 1 à 5 %, exprimé en oxyde métallique, du poids de l'oxyde cérique.

7. Procédé selon la revendication 4 caractérisé par le fait qu'il consiste à mélanger intimement l'oxyde cérique avec au moins un oxyde des métaux précités.

8. Procédé selon la revendication 4 caractérisé par le fait que l'on imprégne l'oxyde cérique à l'aide d'une solution d'au moins un sel des métaux précités décomposables en oxyde par chauffage, constituant un

9. Procédé selon la revendication 8 caractérisé par le fait que l'on imprégne "à sec" l'oxyde cérique, par un volume de la solution précitée du sel des métaux égal au volume poreux de l'oxyde cérique.

10. Procédé selon l'une des revendications 8 ou 9 caractérisé par le fait que le précurseur d'oxyde est un nitrate ou un sulfate d'aluminium.

11. Procédé selon l'une des revendications 8 à 10 caractérisé par le fait que le précurseur d'oxyde est un silicate d'ammonium quaternaire.

12. Procédé selon l'une des revendications 8 à 11 caractérisé par le fait que le précurseur d'oxyde est un sulfate de zirconyle, un nitrate de zirconyle ou un complexe fluoré de zirconium.

13. Procédé selon l'une des revendications 8 à 12 caractérisé par le fait que l'oxyde cérique imprégné est séché entre 80 et 300°C.

14. Procédé selon la revendication 13 caractérisé par le fait que la température de séchage est choisie entre 100 et 150°C.

15. Procédé selon l'une des revendications 13 à 14 caractérisé par le fait que la durée du séchage varie netre 1 et 24 heures.

16. Procédé selon l'une des revendications 8 à 15 caractérisé par le fait que l'oxyde cérique imprégné est calciné entre 400 et 1000°C.

17. Procédé selon la revendication 16 caractérisé par le fait que la température de calcination est choisie entre 600 et 900°C.

18. Procédé selon l'une des revendications 16 ou 17 caractérisé par le fait que la durée de calcination varie entre 1 et 24 heures.

19. Procédé selon la revendication 18 caractérisé par le fait que la durée de calcination est choisie entre 4 et 10 heures.

20. Procédé de fabrication d'une composition à base d'oxyde cérique selon la revendication 1 caractérisé par le fait qu'il consiste :

EP 0 207 857 B1

- dans une première étape, à introduire au moins un précurseur d'oxyde d'un élément métallique A dans une dispersion colloïdale aqueuse d'un composé de cérium IV,
- dans une deuxième étape, à déstabiliser ladite dispersion par addition d'une base,
- dans une troisième étape, à séparer le précipité obtenu,
- dans une quatrième étape, à le soumettre à un traitement thermique.

21. Procédé selon la revendication 20 caractérisé par le fait que le précurseur d'oxyde est un nitrate ou un sulfate d'aluminium, un silicate d'ammonium quaternaire, un sulfate de zirconyle, un nitrate de zirconyle ou un complexe fluoré de zirconium.

22. Procédé selon la revendication 20 caractérisé par le fait que la dispersion colloïdale aqueuse d'un composé de cérium IV est obtenue par mise en dispersion dans l'eau d'un composé de cérium IV répondant à la formule générale (I) :

$$Ce\,(M)_x\,(OH)_y\,(NO_3)_z\,,\,n\,H_2O \qquad (I)$$

dans laquelle :
- M représente un métal alcalin ou un radical ammonium quaternaire
- x est compris entre 0 et 0,2
- z est compris entre 0 et 0,7
- y est tel que $y = 4-z+x$
- n est compris entre 0 et environ 20

23. Procédé selon la revendication 22 caractérisé par le fait que la concentration du composé de cérium IV dans ladite dispersion colloïdale varie entre 0,1 et 2,0 moles/litre.

24. Procédé selon l'une des revendications 22 ou 23 caractérisé par le fait que ladite dispersion est obtenue par mise en dispersion dans l'eau d'un composé de cérium IV obtenu par hydrolyse d'une solution aqueuse de sel de cérium IV en milieu acide, par séparation du précipité obtenu et éventuellement traitement thermique.

25. Procédé selon la revendication 20 caractérisé par le fait que la normalité de la solution basique varie entre 5 et 10 N.

26. Procédé selon la revendication 20 caractérisé par le fait que la quantité de base additionnée est telle que le pH final de la dispersion traitée soit supérieur à 7.

27. Procédé selon la revendication 26 caractérisé par le fait que la quantité de base additionnée est telle que le pH final de la dispersion traitée soit supérieur ou égal à 9, et inférieur ou égal à 10.

28. Procédé selon la revendication 20 caractérisé par le fait que l'on additionne la base dans la dispersion colloïdale aqueuse du composé de cérium IV contenant au moins un précurseur d'oxyde ou inversement : l'addition pouvant être effectuée en une seule fois, graduellement ou en continu.

29. Procédé selon la revendication 28 caractérisé par le fait que le débit d'addition de la base dans ladite dispersion varie entre 0,1 et 5 moles d'OH- par mole de cérium IV et par heure.

30. Procédé selon la revendication 28 caractérisé par le fait que la température du mélange est choisie entre la température ambiante (10-25°C) et 60°C.

31. Procédé selon la revendication 20 caractérisé par le fait que l'on effectue la séparation du précipité selon les techniques classiques de séparation solide-liquide : filtration, décantation, centrifugation ou essorage puis on effectue un ou plusieurs lavages du précipité à l'aide d'eau ou d'un solvant organique.

12

EP 0 207 857 B1

**32.** Procédé selon la revendication 20 caractérisé par le fait que l'on effectue l'étape de séchage à l'air ou sous pression réduite de l'ordre de 133,32 à 13332 Pa (1 à 100 mm de mercure), à une température comprise entre la température ambiante (10-25°C) et 100°C pendant une durée comprise entre 2 et 48 heures.

**33.** Procédé selon la revendication 20 caractérisé par le fait que l'on effectue l'étape de calcination à une température comprise entre 400 et 1000°C pendant une durée allant de 1 heure et 24 heures.

**34.** Procédé selon la revendication 33 caractérisé par le fait que la température de calcination est comprise entre 600 et 900°C.

**35.** Procédé selon l'une des revendications 33 et 34 caractérisé par le fait que la durée de calcination est comprise entre 4 et 10 heures.

**36.** Utilisation de la composition décrite dans l'une des revendications 1 à 3 dans le domaine de la catalyse comme catalyseur ou support catalytique.

## Claims

**1.** Composition based an ceric oxide, characterized in that it essentially contains ceric oxide and an additive constituted by at least one of the oxides of metals A from within the group constituted by aluminium, silicon, zirconium and thorium and having a specific surface greater than 10 $m^2/g$ and which is stable up to a calcination temperature of 900°C.

**2.** Composition according to claim 1, characterized in that the additive represents 1 to 20%, expressed as metallic oxide weight, of the ceric oxide weight.

**3.** Composition according to either of the claims 1 and 2, characterized in that the additive represents 1 to 5%, expressed as metallic oxide weight, of the ceric oxide weight.

**4.** Process for the production of a ceric oxide-based composition according to claim 1, characterized in that it cansists of adding to a ceric oxide with a surface greater than 10 $m^2/g$, an additive constituted by at least one oxide or an oxide precursor of metals chosen from within the group including aluminium, silicon, zirconium and thorium.

**5.** Process according to claim 4, characterized in that the additive represents 1 to 20%, expressed as metal oxide, of the ceric oxide weight.

**6.** Process according to claims 4 or 5, characterized in that the additive represents 1 to 5%, expressed as metal oxide, of the ceric oxide weight.

**7.** Process according to claim 4, characterized in that it consists of intimately mixing the ceric oxide with at least one oxide of the aforementioned metals.

**8.** Process according to claim 4, characterized in that the ceric oxide is impregnated with the aid of a solution of at least one salt of the aforementioned metals decomposable into oxide by heating, constituting an oxide precursor.

**9.** Process according to claim 8, characterized in that the ceric oxide is impregnated "dry" by a volume of the aforementioned solution of the salt of the metals equal to the porous volume of the ceric oxide.

**10.** Process according to either of the claims 8 and 9, characterized in that the oxide precursor is an aluminium sulphate or nitrate.

**11.** Process according to any one of the claims 8 to 10, characterized in that the oxide precursor is a quaternary ammonium silicate.

13

**12.** Process according to any one of the claims 8 to 11, characterized in that the oxide precursor is a zirconyl sulphate, a zirconyl nitrate or a zirconium fluorine complex.

**13.** Process according to any one of the claims 8 to 12, characterized in that the impregnated ceric oxide is dried at between 80 and 300°C.

**14.** Process according to claim 13, characterized in that the drying temperature is between 100 and 150°C.

**15.** Process according to either of the claims 13 and 14, characterized in that the drying time varies between 1 and 24 hours.

**16.** Process according to any one of the claims 8 to 15, characterized in that the impregnated ceric oxide is calcined at between 400 and 1000°C.

**17.** Process according to claim 16, characterized in that the calcination temperature is between 600 and 900°C.

**18.** Process according to either of the claims 16 and 17, characterized in that the calcination time varies between 1 and 24 hours.

**19.** Process according to claim 18, characterized in that the calcination time is between 4 and 10 hours.

**20.** Process for the production of a ceric oxide-based composition according to claim 1, characterized in that it comprises, in a first stage, introducing at least one oxide precursor of a metallic element A into an aqueous colloidal dispersion of a cerium IV compound, in a second stage, destabilizing said dispersion by adding a base, separating the precipitate obtained in a third stage and subjecting it to a heat treatment in a fourth stage.

**21.** Process according to claim 20, characterized in that the oxide precursor is an aluminium sulphate or nitrate, a quaternary ammonium silicate, a zirconyl sulphate, a zirconyl nitrate or a zirconium fluorine complex.

**22.** Process according to claim 20, characterized in that the aqueous colloidal dispersion of a cerium IV compound is obtained by dispersing in water a cerium IV compound complying with the general formula (I):

$$Ce\,(M)_x\,(OH)_y\,(NO_3)_z\,,\,n\,H_2O \qquad (I)$$

in which:
- M represents an alkali metal or a quaternary ammonium radical,
- x is between 0 and 0.2,
- z is between 0 and 0.7,
- y is such that $y = 4 - z + x$,
- n is between 0 and approximately 20.

**23.** Process according to claim 22, characterized in that the concentration of the cerium IV compound in said colloidal dispersion varies between 0.1 and 2.0 moles/litre.

**24.** Process according to either of the clams 22 and 23, characterized in that said dispersion is obtained by dispersing in water a cerium IV compound obtained by the hydrolysis of an aqueous cerium IV salt solution in an acid medium, separation of the precipitate obtained and an optional heat treatment.

**25.** Process according to claim 20, characterized in that the normality of the basic solution varies between 5 and 10 N.

**26.** Process according to claim 20, characterized in that the added base quantity is such that the final pH of the treated dispersion exceeds 7.

14

**27.** Process according to claim 26, characterized in that the added base quantity is such that the final pH of the treated dispersion is equal to or greater than 9 and equal to or less than 10.

**28.** Process according to claim 20, characterized in that the base is added to the aqueous colloidal dispersion of the cerium IV compound containing at least one oxide precursor or vice versa, it being possible for the addition to take place once and for all, gradually or continuously.

**29.** Process according to claim 28, characterized in that the base addition rate to said dispersion varies between 0.1 and 5 moles of $OH^-$ per mole of cerium IV and per hour.

**30.** Process according to claim 28, characterized in that the temperature of the mixture is between ambient temperature (10-25°C) and 60°C.

**31.** Process according to claim 20, characterized in that the precipitate is separated according to conventional solid-liquid separation procedures, namely filtration, decanting, centrifuging or suction filtering, which is followed by one or more precipitate washing operations using water or an organic solvent.

**32.** Process according to claim 20, characterized in that the drying stage takes place in air or under a reduced pressure of approximately 133.32 to 13332 Pa (1 to 100 mm of mercury), at a temperature between ambient temperature (10-25°C) and 100°C for a time between 2 and 48 hours.

**33.** Process according to claim 20, characterized in that the calcination stage is performed at a temperature between 400 and 1000°C for between 1 and 24 hours.

**34.** Process according to claim 33, characterized in that the calcination temperature is between 600 and 900°C.

**35.** Process according to either of the claims 33 and 34, characterized in that the calcination time is between 4 and 10 hours.

**36.** Use of the composition described in one of the claims 1 to 3 in the catalysis field as a catalyst or catalyst support.

**Patentansprüche**

**1.** Masse auf der Basis von Ceroxid, dadurch gekennzeichnet, daß sie im wesentlichen Ceroxid und einen Zusatz, bestehend aus mindestens einem der Oxide der Metalle A aus der Gruppe bestehend aus Aluminium, Silicium, Zirkonium und Thorium, enthält und mit einer spezifischen Oberfläche oberhalb 10 $m^2$/g, beständig bis zu einer Brenntemperatur von 900°C.

**2.** Masse nach Anspruch 1, dadurch gekennzeichnet, daß der Zusatz 1 bis 20%, angegeben als Gewicht des Metalloxids, bezogen auf das Gewicht des Ceroxids, ausmacht.

**3.** Masse nach einem der Ansprüche 1 und 2, dadurch gekennzeichnet, daß der Zusatz 1 bis 5%, angegeben als Gewicht des Metalloxids, bezogen auf das Gewicht des Ceroxids, ausmacht.

**4.** Verfahren zur Herstellung einer Masse auf der Basis von Ceroxid nach Anspruch 1, dadurch gekennzeichnet, daß man zu einem Ceroxid mit einer Oberfläche über 10 $m^2$/g einen Zusatz zugibt, der aus mindestens einem Oxid oder einem Oxidvorläufer von Metallen, ausgewählt aus der Gruppe Aluminium, Silicium, Zirkonium und Thorium, besteht.

**5.** Verfahren nach Anspruch 4, dadurch gekennzeichnet, daß der Zusatz 1 bis 20%, angegeben als Metalloxid, des Gewichtes des Ceroxids ausmacht.

**6.** Verfahren nach Anspruch 4 bis 5, dadurch gekennzeichnet, daß der Zusatz 1 bis 5%, angegeben als Metalloxid, des Gewichtes des Ceroxids ausmacht.

**7.** Verfahren nach Anspruch 4, dadurch gekennzeichnet, daß man das Ceroxid mit mindestens einem Oxid der vorgenannten Metalle innig vermischt.

**8.** Verfahren nach Anspruch 4, dadurch gekennzeichnet, daß man das Ceroxid mit einer Lösung mindestens eines Salzes der vorgenannten Metalle, das durch Erhitzen zum Oxid zersetzt werden kann und einen Vorläufer des Oxids darstellt, imprägniert.

**9.** Verfahren nach Anspruch 8, dadurch gekennzeichnet, daß man das Ceroxid "trocken" imprägniert mit einem Volumen der vorgenannten Metallsalzlösung, das gleich ist dem Porenvolumen des Ceroxids.

**10.** Verfahren nach einem der Ansprüche 8 oder 9, dadurch gekennzeichnet, daß der Oxidvorläufer ein Aluminiumnitrat oder -sulfat ist.

**11.** Verfahren nach einem der Ansprüche 8 bis 10, dadurch gekennzeichnet, daß der Oxidvorläufer ein quaternäres Ammoniumsilicat ist.

**12.** Verfahren nach einem der Ansprüche 8 bis 11, dadurch gekennzeichnet, daß der Oxidvorläufer ein Zirkonylsulfat, Zirkonylnitrat oder ein fluorierter Zirkoniumkomplex ist.

**13.** Verfahren nach einem der Ansprüche 8 bis 12, dadurch gekennzeichnet, daß das imprägnierte Ceroxid bei 80 bis 300°C getrocknet wird.

**14.** Verfahren nach Anspruch 13, dadurch gekennzeichnet, daß die Trocknungstemperatur zwischen 100 und 150°C gewählt wird.

**15.** Verfahren nach einem der Ansprüche 13 bis 14, dadurch gekennzeichnet, daß die Trocknungsdauer im Bereich von 1 bis 24 h schwankt.

**16.** Verfahren nach einem der Ansprüche 8 bis 15, dadurch gekennzeichnet, daß das imprägnierte Ceroxid bei 400 bis 1000°C gebrannt wird.

**17.** Verfahren nach Anspruch 16, dadurch gekennzeichnet, daß die Brenntemperatur zwischen 600 und 900°C gewählt wird.

**18.** Verfahren nach einem der Ansprüche 16 oder 17, dadurch gekennzeichnet, daß die Brenndauer zwischen 1 und 24 h schwankt.

**19.** Verfahren nach Anspruch 18, dadurch gekennzeichnet, daß die Brenndauer zwischen 4 und 10 h gewählt wird.

**20.** Verfahren zur Herstellung einer Masse auf der Basis von Ceroxid nach Anspruch 1, dadurch gekennzeichnet, daß man:
- in einer ersten Stufe mindestens einen Oxidvorläufer eines metallischen Elementes A in eine wäßrige kolloidale Dispersion einer Verbindung von Cer-IV einbringt,
- in einer zweiten Stufe diese Dispersion durch Zugabe einer Base destabilisiert,
- in einer dritten Stufe den erhaltenen Niederschlag abtrennt und
- ihn in einer vierten Stufe einer thermischen Behandlung unterwirft.

**21.** Verfahren nach Anspruch 20, dadurch gekennzeichnet, daß der Oxidvorläufer ein Aluminiumnitrat oder -sulfat, ein quaternäres Ammoniumsilicat, ein Zirkonylsulfat, ein Zirkonylnitrat oder ein fluorierter Zirkoniumkomplex ist.

**22.** Verfahren nach Anspruch 20, dadurch gekennzeichnet, daß die wäßrige kolloidale Dispersion einer Cer-IV-Verbindung erhalten wird, indem man eine Cer-IV-Verbindung der allgemeinen Formel (I)

$$Ce\,(M)_x\,(OH)_y\,(NO_3)_z\,,\,n\,H_2O \qquad (I)$$

in der:

16

EP 0 207 857 B1

- M ein Alkalimetall oder eine quaternäre Ammoniumgruppe bedeutet,
- x im Bereich von 0 bis 0,2 liegt,
- z im Bereich von 0 bis 0,7 liegt,
- y einen Wert hat, daß y = 4 - z + x,
- n im Bereich von 0 bis etwa 20 liegt,

in Wasser dispergiert.

23. Verfahren nach Anspruch 22, dadurch gekennzeichnet, daß die Konzentration der Cer-IV-Verbindung in der kolloidalen Dispersion im Bereich von 0,1 bis 2,0 mol/l liegt.

24. Verfahren nach einem der Ansprüche 22 oder 23, dadurch gekennzeichnet, daß die Dispersion erhalten wird, indem man in Wasser eine Cer-IV-Verbindung dispergiert, die durch Hydrolyse einer wäßrigen Cer-IV-Salzlösung in saurem Medium, Abtrennen des Niederschlags und gegebenenfalls thermische Behandlung erhalten worden ist.

25. Verfahren nach Anspruch 20, dadurch gekennzeichnet, daß die Normalität der basischen Lösung im Bereich von 5 bis 10 n liegt.

26. Verfahren nach Anspruch 20, dadurch gekennzeichnet, daß soviel Base zugesetzt wird, daß der End-pH-Wert der behandelten Dispersion über 7 liegt.

27. Verfahren nach Anspruch 26, dadurch gekennzeichnet, daß soviel Base zugesetzt wird, daß der End-pH-Wert der behandelten Dispersion $\geq 9$ und $\leq 10$ ist.

28. Verfahren nach Anspruch 20, dadurch gekennzeichnet, daß man die Base der wäßrigen kolloidalen Dispersion der Cer-IV-Verbindung, die mindestens einen Oxidvorläufer enthält, zusetzt oder umgekehrt, wobei die Zugabe auf einmal, stufenweise oder kontinuierlich erfolgen kann.

29. Verfahren nach Anspruch 28, dadurch gekennzeichnet, daß die Zugabemenge der Base zur Dispersion im Bereich von 0,1 bis 5 mol $OH^-$ je mol Cer-IV und je h ausmacht.

30. Verfahren nach Anspruch 28, dadurch gekennzeichnet, daß die Temperatur des Gemisches zwischen Raumtemperatur (10-25°C) und 60°C gewählt wird.

31. Verfahren nach Anspruch 20, dadurch gekennzeichnet, daß man den Niederschlag mit Hilfe der klassischen Arbeitsweisen der Trennung fest-flüssig: Filtrieren, Dekantieren, Zentrifugieren oder Abschleudern, abtrennt und dann den Niederschlag ein oder mehrere Male mit Wasser oder einem organischen Lösungsmittel wäscht.

32. Verfahren nach Anspruch 20, dadurch gekennzeichnet, daß man das Trocknen in der Luft oder unter einem verminderten Druck im Bereich von 133,32 bis 13 332 Pa (1 bis 100 mm Hg) bei einer Temperatur im Bereich von Raumtemperatur (10-25°C) und 100°C während einer Zeitspanne von 2 bis 48 h durchführt.

33. Verfahren nach Anspruch 20, dadurch gekennzeichnet, daß man die Brennstufe bei einer Temperatur im Bereich von 400 bis 1000°C während einer Zeitspanne von 1 bis 24 h durchführt.

34. Verfahren nach Anspruch 33, dadurch gekennzeichnet, daß die Brenntemperatur im Bereich von 600 bis 900°C liegt.

35. Verfahren nach einem der Ansprüche 33 und 34, dadurch gekennzeichnet, daß die Brenndauer 4 bis 10 h beträgt.

36. Verwendung der in einem der Ansprüche 1 bis 3 beschriebenen Masse auf dem Gebiet der Katalyse als Katalysator oder Katalysatorträger.

17